# EUROPEAN PATENT APPLICATION

(11) **EP 1 397 000 A1**
(43) Date of publication of application: **10.03.2004**
(21) Application number: 02016099.0
(22) Date of filing: 19.07.2002
(51) Int. Cl.: H04N 5/92, H04N 9/82

(54) **Data stream for transporting DVD sub-pictures, device and method for processing such data stream and data carrier comprising such data stream**

(71) Applicant: DEUTSCHE THOMSON-BRANDT GMBH, 78048 Villingen-Schwenningen (DE)
(72) Inventor: Winter, Marco, 30173 Hannover (DE)
(74) Representative: Thies, Stephan

(57) **Abstract**

The invention relates to a data stream for transporting sub-picture units for enhanced display, which data stream is compatible with devices that work according to conventional DVD standard. It further relates to a device and a method for processing such data stream as well as to a data carrier comprising such data stream.

A data stream according to the invention comprises an increased sub-picture unit header (HDTV_SPUH), which extends into a conventional pixel data area (PXD), an indicator (MAGIC_WORD) for indicating availability of enhanced sub-picture data (HDTV_SP_DCSQi, HDTV_PXDi), the indicator (MAGIC_WORD) being located in the increased sub-picture unit header (HDTV_SPUH), and a pointer (SET_DSPXA) for indicating a start address of pixel data (PXDi), the pointer pointing to an address following the increased sub-picture unit header (HDTV_SPUH).

## Description

The invention relates to a data stream for transporting sub-picture units for enhanced display, which data stream is compatible with devices that work according to conventional DVD standard. It further relates to a device and a method for processing such data stream as well as to a data carrier comprising such data stream.

It is an object of the invention to make such data stream more versatile, especially in view of sub-picture processing, than according to conventional DVD standard.

According to the invention a data stream for transporting sub-picture units for enhanced display, which data stream is compatible with devices being compliant to or being in conformity with conventional DVD standard, comprises an increased sub-picture unit header, which extends into a conventional pixel data area, an indicator for indicating availability of enhanced sub-picture data, which indicator is located in the increased sub-picture unit header area, and a pointer for indicating a start address of pixel data. Preferably, the enhanced display is a display of enhanced resolution. An advantage of this arrangement is that the data stream comprises an increased header but is still compatible with devices working according to current DVD standard regarding sub-picture units. An increased header allows for more versatility, for example it may comprise a pointer to an increased address space, thus leading to more data capacity of a single sub-picture unit. The provision of a pointer for indicating a start address of pixel data prevents conventional devices from erroneously trying to process the increased header data. This makes the data stream, according to the invention compatible to current DVD standard although it does not conform, to it. The format of the data stream according to the invention is an enhancement/amendment to the current DVD standard.

The indicator is preferably located at a predefined location in the increased sub-picture unit header. This has the advantage that it is thus easily detectable. One example is to perform an XOR operation of the respective part of the increased header with the indicator thus reaching an unambiguous result.

According to the invention the indicator is provided in an unconventional format with respect to the conventional pixel data area. This has the advantage that it cannot erroneously be taken as conventional pixel data. The unconventional format is preferably a format, which is forbidden for the pixel data area. In case of DVD standard the pixel data are run length coded, so that the indicator is preferably non-run length coded. Examples for such unconventional data with respect to the conventional pixel data area are the byte sequences 0 4, 0 64, 0 H, 0 D, etc. In general, all combinations of first byte "0" and second byte equal or larger than "4" would constitute such unconventional data format.

Preferably, the enhanced sub-picture data is high resolution display data. This has the advantage that sub-picture display is thus easily possible to be integrated with high definition television display, also called HDTV display.

A data stream for transporting sub-picture units for enhanced display, which data stream is compatible to devices being compliant to conventional DVD standard comprises according to the invention a header area, a conventional pixel data area, a command area, and an enhanced pixel data area, wherein the enhanced pixel data area is arranged following the command area and an indicator or a pointer is arranged in an area which is hidden according to conventional DVD standard. This has the advantage that it makes possible to include additional pixel data without departing too far from the data structure of conventional DVD standard, by adding the additional pixel data after the last portion of the conventional sub-picture data and providing an indication to the additional data in a hidden area, that is at a place where the conventional DVD sub-picture decoder does not expect and therefore does not check for data. Not departing too far is used here in the meaning of still being compatible to devices being in conformity with the current DVD standard.

Preferably, the hidden area is provided for in either the command area or the conventional pixel data area. The advantage of providing the hidden area in the command area, for example following an end command, is that the enhanced decoder thus just needs to check if there is an indication after the end command. An advantage of providing the hidden area in the conventional pixel data area, for example at the beginning of the pixel data area, is that the area can be made hidden by use of the conventionally available pointer that points to the first or any other suitable pixel data information. This pointer is made to point to an address following the hidden area.

Preferably, the previously mentioned solutions are combined together.

According to the invention the data arranged in the enhanced pixel data area constitute either a complete enhanced sub-picture or are used in combination with the conventional pixel data to generate a completed enhanced sub-picture. The advantage of complete enhanced sub-picture is that the data is easy to decode because the complete sub-picture can just be taken from the enhanced pixel data area. An advantage of the upsize data arranged in the enhanced pixel data area is that less data space is needed in the enhanced pixel data area as the conventional sub-picture data are also used so that only additional information is provided in the enhanced pixel data area.

According to the invention at least one enhanced command type is provided for in the command area, which enhanced command type only slightly differs from a corresponding conventional command type. This has the advantage that it makes easy to adapt existing sub-picture decoders to process also the enhanced data stream as only slight changes need to be implemented but no completely new commands are to be implemented. Corresponding commands perform similar or the same function for both the conventional sub-picture and the enhanced sub-picture, respectively.

Preferably, an enhanced command differs from the corresponding conventional command by either making use of bits being reserved according to conventional standard, or by inserting additional bits or bytes, or by changing the command code about a predefined value, for example all commands 0x are changed to 2x or a command FF is changed to a command FE. These are very attractive solutions to increase versatility by only slightly changing the commands and while keeping the general command structure. According to the invention a data stream comprises two end commands in a single sub-picture display control sequence. One of the end commands, here called first end command, ends the conventional commands and the other end command, here called second end command, follows the enhanced commands. In case that there is no enhanced command used in a certain case, the first end command is deemed to be the last enhanced command, i.e. the second end command directly follows the first end command in this case. This makes sure that a conventional device does not process the enhanced commands while the enhanced device ignores the first end command and stops only when reaching the second end command. An alternative solution is to provide only a single end command, following the last enhanced command. This solution is much easier as only one end command is needed. It is also compatible with conventional devices as a conventional decoder ignores unknown commands and interprets them as an end command when no further command is to be expected.

Highlight information for enhanced resolution display, which is compatible with devices being compliant with conventional resolution DVD standard comprise according to the invention position information according to conventional DVD standard and reserved bits according to conventional DVD standard, wherein predefined bits of said reserved bits comprise least significant bit information and/or most significant bit information of start and/or end coordinates. This has the advantage that no change in the data structure of the highlight information according to conventional standard needs to be done, but only previously reserved bits now serve as additional bits to extend the conventional coordinate data to enhanced resolution display highlight data. Conventional devices ignore the additional data, the data stream according to the invention is thus compatible to such devices.

Another advantageous solution to provide a data stream for transporting highlight information for enhanced resolution display, which data stream is compatible with devices being compliant to conventional resolution DVD standard, is that said data stream comprises position information being arranged at positions as specified according to conventional DVD standard, wherein coordinates are down-scaled by a predefined factor and/or shifted by a predefined offset compared to the highlight area to be displayed. By multiplying these coordinates with predefined factors an up-scaling to the enhanced resolution display is reached. Said factors are preferably identical for x- and y-direction, but they may also advantageously differ from each other in order to optimally fill the necessary space with low losses. Similarly, a shift about a predefined amount is advantageously performed, in addition to the up-scaling, or, more simply to implement, on its own.

A data carrier according to the invention comprises a data stream having a data structure according to the data stream as indicated above. Such data carrier is physically distinguishable from a data carrier comprising a conventional data stream.

A device for processing sub-picture units for enhanced display according to the invention comprises a detector for detecting an indicator for indicating availability of enhanced sub-picture data and a processing unit for processing the enhanced sub-picture data.

A device for processing a data stream comprising highlight information for enhanced resolution display according to the invention is provided with the features as indicated in the respective device claims.

A method for processing a data stream according to the invention comprises the steps as indicated in the respective method claims.

Further features and advantages of the invention are also described in the following description of embodiments making use of the figures, wherein
- Fig. 1: shows a data stream according to the invention,
- Fig. 2: shows a command area of a data stream according to the invention, and
- Fig. 3: a device according to the invention.

In the description the following abbreviations are used:
HLI = Highlight Information
SP = Sub-picture
SPU = Sub-picture Unit
SPUH = SPU Header. First 4 bytes of a SPU. Contains the size of the SPU and the start address of the SP_DCSQT.
DVD = Digital Versatile Disc
PXD = Pixel Data Area. Run-length coded bitmap of a SPU.

The invention is based on DVD Specification for Read-Only Disc, version 1.1, Part 3. In the description this specification is referred to as "DVD Specification" or as "current DVD standard".

The invention refers to adapt the DVD specification to support HDTV conform sub-picture and HDTV conform HLI. HDTV is enhanced resolution display, also called High Definition TV, of up to 1920x1132 pixels. One problem is, that neither sub-picture nor HLI is defined to support picture x-/y-coordinates beyond 1024 (range of x,y: 0 to 1023). Their resolution is restricted to 1024x1024. The embodiments described below show how to change the definition of sub-picture and HLI to cover the maximum range of x-/y-coordinates up-to 1920/1152. Even a conventional sub-picture decoder is able to handle such an enhanced SPU, of course, without using the HDTV features.

The embodiments described are based on the idea to combine conventional DVD with HDTV DVD, i.e. they are intended for a system, which separates the HDTV video stream into a conventional video stream (MPEG II) and a difference stream to up-size the conventional video to an HDTV video. So, the DVD player does either decode a conventional MPEG II stream or generates an HDTV signal, if such a decoder is available and the display is compatible to HDTV.

The embodiments require a change of the SPU definition, but no change of the SPU packet definition. Additional information is added to the HLI definition to cover HDTV. The HDTV sub-picture decoder supports three additional commands, which are very similar to four already existing commands, i.e. there is only a small effort necessary to add the HDTV functionality to existing sub-picture decoder architectures.

One solution to use the reserved bits of the SET_DAREA command to increase the resolution could lead to problems with already existing DVD Players and might not solve the problem of handling wider pixel maps.

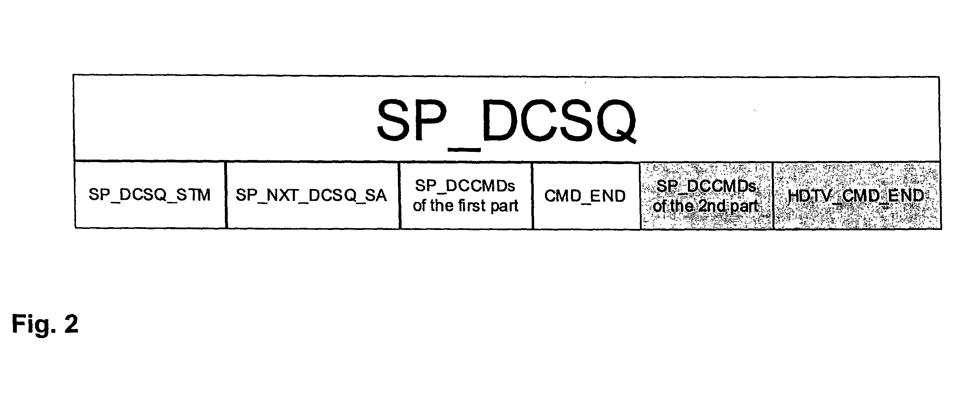

According to the described embodiments the already existing sub-picture commands are kept as they are. Additional new commands are used to enhance the higher resolution. These commands are put after the CMD_END command of a SP_DCSQ, i.e. between the CMD_END command and the next SP_DCSQ as shown in figure 2. A conventional SP decoder will ignore such "hidden" commands.

One of the new commands is an enhanced pixel area command SET_DAREA command, called SET_HDTV_DAREA, which copes with a resolution up-to 2048*2048 pixels by using the bits b10, b22, b34 and b46, which are currently not used for the SET_DAREA command.

The enhanced SET_DAREA is in the embodiment equal to the normal SET_DAREA command except the bits b46, b34, b22 and b10. In amendment to the current DVD Specification, page VI5-82 the "Start X-coordinate (upper bits)" shall cover b46, the "End X-coordinate (upper bits)" shall cover b34, the "Start Y-coordinate (upper bits)" shall cover b22 and the "End Y-coordinate (upper bits)" shall cover b10. Of course, the appropriate command describing text of this command is also expanded to cover HDTV.

Another new command is a new address command SET_HDTV_DSPXA, replacing the command SET_DSPXA for enhanced display. The new command SET_HDTV_DSPXA covers a wider range of addresses for an HDTV PXD. According to a preferred embodiment use is made of bits as follows:
b0 to b23: Address of the first pixel data for bottom field. b24 to b47: Address of the first pixel data for top field. b48 to b55: The code for this command, which is code 16h.
In order to keep the implementation as simple as possible this SET_HDTV_DSPXA command shall be used, even in the case of progressive HDTV. In the case of progressive HDTV the sub-picture decoder shall use only the pointer of the top field. But, this shall address a progressive bitmap, i.e. not only a field.

According to another embodiment the second SET_DSPXA command is identical to the already defined SET_DSPXA. In case that the second SET_DSPXA command is identical to the already defined SET_DSPXA, then an indicator command as the end command CMD_END or at least one new sub-picture command, as the enhanced SET_DAREA command is set between the last normal sub-picture command xxx_yyy and the second SET_DSPXA command. So, a normal sub-picture decoder does not parse this second SET_DSPXA command.

If the first part of the command area SP_DCSQ, which is according to current DVD standard, contains a CHG_COLCON command, then the second, hidden part of this SP_DCSQ should also contain an enhanced CHG_COLCON command CHG_HDTV_COLCON. This enhanced CHG_HDTV_COLCON command, code 17h, is the same as the current CHG_COLCON command, code 7, but bits b10 and b26 of LN_CTLI and b42 of PX_CTLI according to current DVD standard are used according to one embodiments as the X- and Y-coordinates extending bits to cover a screen of up-to 2048*2048 pixels.

After the last command of the second hidden part of a SP_DCSQ a new end command HDTV_CMD_END, code FEh, indicates the end of the enhanced command sequence. A HDTV_CMD_END is used even if there is no other SP_DCCMD command xxx_HDTV_xxx is present in the second SP_DCSQ part.

An advantage of this new command HDTV_CMD_END is that it simplifies hardware decoders: if the decoder is in conventional mode, then it searches for a CMD_END to detect the end of the SP_DCCMD. If the decoder is in HDTV mode, then it ignores a CMD_END and searches for a HDTV_CMD_END to detect the end of the SP_CCMD. An alternative embodiment uses the same end command CMD_END at both positions. In this case the enhanced decoder needs to count the end commands to determine the end of the enhanced area.

The codes for the commands are chosen in a way, that only one bit differs to each related conventional command. This also simplifies the implementation in existing sub-picture decoder architectures.

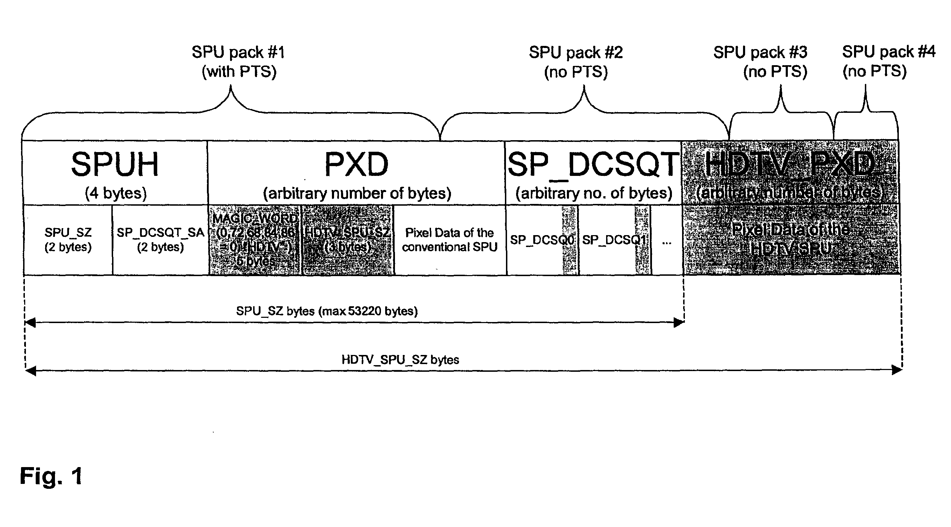

The next problem solved by the invention is the restricted size of the SPU. The size of a conventional SPU is restricted to 53220 bytes. This is not enough for an HDTV sub-picture. This limitation restricts the possible amount of details in the picture. This space would be normally enough for normal sub-titles. But, such a limited memory could lead to undesired coarse picture structures for other sub-picture applications, as DVD menus. It is a stronger effort to enhance the sub-picture specification to allow a more detailed PXD. To allow 65536 bytes per SPU is not a sufficient solution, because some current SP decoders may get in trouble. So, a solution is desired conform to the old SPU specification. The invention proposes to increase this sub-picture size limit for an HDTV sub-picture. The problem is, that the size command SPU_SZ according to DVD standard is only a 2-byte value, i.e. max. 65535. That means that there is no way to increase the limit of this value seriously. According to the invention a second SPU_SZ value is used: The HDTV_SPU_SZ value as shown in figure 1.

That means that there are provided two sizes: one for the conventional SPU and one additional for the HDTV SPU. As the size for the conventional SPU the size indicator in the SPUH is used, i.e. there is no additional space/definition necessary. The HDTV SPU size can be localized at diverse parts of the SPU.

According to a preferred embodiment the HDTV_SPU_SZ value is put into the PXD part of the pixel area. In order to indicate that this is a HDTV_SPU_SZ value and not a run-length code of the PXD an indicator, also called a magic word MAGIC_WORD for example the values 0, 72, 68, 84, 86 is put in front of the HDTV_SPU_SZ value. The magic number word follows immediately after the header SPUH. The magic number is a combination of bytes, which does not occur in real sub-picture bitmaps. In the example given the code 0, 72, 68, 84, 86 is not a valid run-length code.

Only if this magic word exists in the SPU, all SP_DCSQ of this SPU shall have a second part, i.e. at least a HDTV_CMD_END command. If this magic word does not exist in the SPU, then the HDTV sub-picture decoder shall ignore any bytes between the CMD_END of a SP_DCSQ and the beginning of the next SP_DCSQ, if any.

The location according to this embodiment is just behind the SPUH. These bytes belong to the PXD area. That means if no SPU command uses these first bytes of the PXD area, then this area may be used for other purposes. It is not enough to only locate here the HDTV SPU size. There is a need of additional information to indicate the HDTV SPU decoder that this is really HDTV SPU size information. Without this additional information these first PXD area bytes could be conventional run-length codes. It is proposed to use some leading non-run-length coding words, which indicate unambiguously an HDTV SPU size value, see ID code in figure 1. This ID code is for example a leading 0-byte plus the ASCII characters "EXT", i.e. 0, 69, 88, 84. This byte combination is not a valid run-length code. Therefore, it is obviously not a part of the bitmap. This is proof enough for the HDTV SPU decoder to know, that the following bytes indicate the HDTV SPU size.
Existing DVD players have no problems with unused bytes at the beginning of the PXD area.
Other embodiments are: To put the HDTV SPU size somewhere else into the PXD and to put the ID code somewhere else into the PXD or to put the ID code and/or the HDTV SPU size into the SP_DCSQT, e.g. as special command or just after CMD_END directly at the end of the conventional SPU. Also other solutions are possible according to the invention.

The start of the pixel data area PCD is a preferred position for the HDTV_SPU_SZ value, because, this value must be read by the demultiplexer in order to be able to detect the end of a SPU. This location is easy and quickly to be found by the demultiplexer.

It is a very simple way to be implemented into a HDTV SPU decoder. With this extension of the SPU specification a conventional SPU decoder loads only the first SPU_SZ bytes into the SPU decoder, i.e. a conventional SPU decoder simply ignores the remaining HDTV PXD area. That is no problem for already implemented SPU decoders, because the start of a SPU is defined in section 5 of the DVD specification, see note 1 on page VI5-30. The end of a SPU is given only by the SPU_SZ of the SPU. That means, trailing "empty" sub-picture packs, that means packs not intended to be used by a conventional sub-picture decoder, are not used, see packs #3 and #4 in figure 1.

Such an additional HDTV PXD requires an enhanced SP_DSPXA command, if the enhanced DSPXA command shall point to an arbitrary position inside HDTV PXD. The reason is, that SP_DSPXA contains only 2 byte pointers. This pointer cannot point over the boundary of 65535. There must be higher values available, e.g. by an enhanced SP_DSPXA command with e.g. 3 or 4 byte addresses, i.e. the enhanced SP_DSPXA command has another format than the normal SP_DSPXA command.

There are at least two possible ways to interpret the addresses of the second or enhanced SET_DSPXA command: The first is that it
- points to complete new parts of the PXD, which means that the PXD contains separated bitmaps, i.e. separated between conventional DVD and HDTV DVD. A second way is that it
- points to additional parts of the PXD. These additional parts contain for example scalable coded information to expand the conventional DVD sub-picture to HDTV sub-picture. The second solution would reduce the amount of bytes for the PXD. But, the first solution would simplify the hardware/software of the sub-picture decoder.

If the HDTV_PXD area contains scalable pixel information as additional information to the PXD, then normally each SET_DSPXA command requires an appropriate enhanced SET_DSPXA command in order to get the scalable pixel information available.

If the HDTV_PXD area contains only normal run-length codes, i.e. no scalable pixel information, then normally each SET_DSPXA command requires an appropriate enhanced SET_DSPXA command in order to get the appropriate HDTV run-length codes available. That means, the run-length decoder decodes only pixel from the HDTV_PXD for enhanced display, no pixels from the conventional PXD.

The SET_HDTV_DSPXA command may point into the PXD or into the HDTV_PXD. The HDTV_PXD follows the conventional SPU. A conventional SP decoder will load and decode only the conventional SPU part. Only an HDTV sub-picture decoder will load and use the HDTV_PXD part.

The demultiplexer DMUX puts the SPU packets into the sub-picture decoder. The information about the length of a SPU, that is the number of SPU packets of one SPU, is derived by the demultiplexer from the SPU_SZ of the first SPU packet of a SPU. The first SPU packet of a SPU is indicated by PES_extension_flag=1 (1=first pack of a SPU; 0=all other packs of a SPU). So, a conventional SP decoder would ignore the SPU packets 3 and 4 of the example in figure 1, i.e. a conventional demultiplexer loads only the SPU packet 1 and - depending on SPU_SZ only a part of - SPU packet 2 into the sub-picture decoder. Only a HDTV sub-picture decoder looks for the HDTV_SPU_SZ value. With this information the demultiplexer also loads the HDTV_PXD data, that is the remainder of SPU packet 2 and the SPU packets 3 and 4, into the HDTV sub-picture decoder. Therefore, a change of the SPU packet definition is not necessary.

The shown embodiments require a change of the current SPU decoders to support HDTV SPUs. One main advantage of them is, that they are chosen in a way, that only minor SPU decoder architecture changes are necessary. That keeps the implementation effort small. Another main advantage is that the HDTV SPUs are even compatible to already existing DVD players.

A problem with extending the highlighted information HLI to enhanced resolution display is, that there is only a Button Position Information similar to the SP_DAREA format, the Button Position Information, BTN_POSI, page VI4-127 of current DVD standard.

The Bits b0 to b21 and the bits b24 to b45 are identical to SP_DAREA. But, the bits B22, b23, b46 and b47 are already used.

According to a first embodiment the BTN_POSI kept as it is, but the X- and Y-coordinate values are multiplied by 2 before they are used as the appropriate coordinates. So, the resulting HLI window resolution is 2048*2048 pixel. Of course, HLI is no longer able to start or end at an odd X-or Y-coordinate, however, this is acceptable as normally use of highlight information HLI is preferred for DVD menus. That means, HLI highlights parts of a sub-picture to indicate to the user where he is and where he can go with the cursor keys. So, it is normally not required to have a very detailed position of the HLI window.

This solution is simple to implement in current HLI decoder architectures. Of course, such a BTN POSI is useable ONLY for HDTV. That means in order to handle also conventional video a further, in most cases different, PGC for conventional video is needed.

According to another embodiment, the bits b35, b34, b11 and b10, see DVD Specification, page VI4-127, are used as follows: "Start X-coordinate (upper bits)" shall cover b35 as new least significant bit, "End X-coordinate (upper bits)" shall cover b34, "Start Y-coordinate (upper bits)" shall cover b11 as new least significant bit and "End Y-coordinate (upper bits)" shall cover b10. The appropriate command describing text of this command is expanded to cover also HDTV.

According to a further embodiment use of the bits b35, b34, b11 and b10 is made as follows: "Start X-coordinate (upper bits)" shall use b35 as new most significant bit, "End X-coordinate (upper bits)" shall cover b34, "Start Y-coordinate (upper bits)" shall use b11 as new least significant bit and "End Y-coordinate (upper bits)" shall cover b10. The appropriate command describing text of this command is expanded to cover also HDTV.

This is easier to implement than the previous embodiment in the case of an implementation based on an existing sub-picture hardware decoder architecture.

Still another preferred embodiment foresees to keep the Button Position Information format as it is, but for HDTV the HLI decoder has to shift each of the X coordinates 1 bit position to the left and has to multiply each Y coordinate with the value 1.125. So, the coordinates are able to cover a screen of 2048x1152 pixels, but only even X coordinates and nearly each Y coordinate. The multiplication is preferably done by an addition of the appropriate Y coordinate and the same Y value 3 times shifted to the right (Y +Y/8 = 1.125*Y; range: 0...1150). Advantageously after this calculation the value 1 is added in order to use the range of the Y coordinate more effectively (Y+Y/8+1 = 1.125*Y+1; range: 1...1151). This is useful, because the first two lines of the HLI screen (0 and 1) are not used. Other useful alternative calculations are fore example Y+Y/8+2 or Y+(Y+1)/8.

This method is a little bit more sophisticated than the first embodiment, but it provides to use more effectively the available bits to support HDTV HLI as good as possible. Although it is not possible to realize each theoretically possible HLI window position, normally with such restrictions on HLI window positions nearly every kind of menu is still realizable without making use of additional bits.

A very simple method to implement is the following embodiment: The Button Position Information format is kept as it is, but for HDTV the HLI decoder has to shift the X coordinate 1 bit position to the left and the Y coordinate is used as it is i.e. no shift, but an offset is added to the Y coordinate. This offset is derived from the vertical resolution in a way, that the possible Y coordinates are either centered to the screen, for example offset for 1152 lines: 1152-1024/2=64, or beginning with the top of the screen, that is offset 0, or aligned with the bottom of the screen, that is offset for 1152 lines: 1152-1024=128.

The shown embodiments require a change of the current HLI handling to support HDTV HLI. One main advantage is, that they are chosen in a way, that only minor HLI handling changes are necessary. That keeps the implementation effort small. Another main advantage is that the HDTV HLI is even compatible to already existing DVD players.
The embodiments, in which the coordinates are multiplied by a factor support a detailed resolution, which provides nearly the full HLI functionality as it is already provided for the conventional resolutions.

Of course, the described embodiments do not limit the scope of the invention. Other combinations or amendments of advantageous features lie also within the invention.

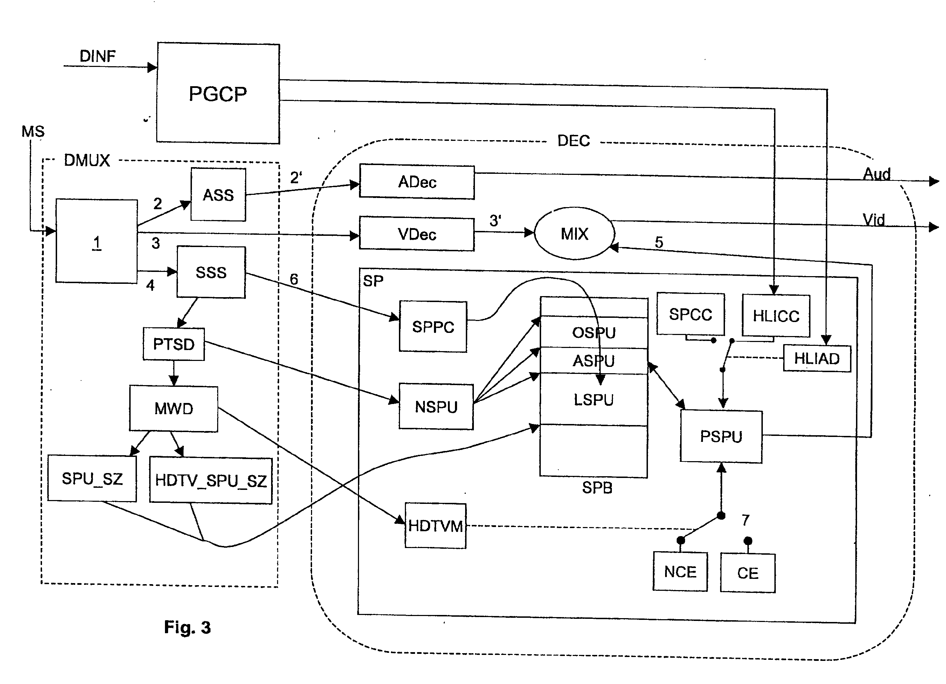

Fig. 3 shows a schematic of a device according to the invention. A multiplexed data stream MS is fed to a demultiplexer DMUX, which provides demultiplexed signals to a decoder DEC. The multiplexed data stream MS is taken in a known manner, not described here, from an optical disk, a DVD. Also DVD information files DINF are taken from this optical disk and provided to a program chain processor PGCP. The program chain processor PGCP provides also signals to the decoder DEC. The decoder DEC outputs Audio and Video data Aud, Vid to be displayed or further processed.

The demultiplexer is provided with a stream type detector 1, which separates the multiplexed stream MS into an audio stream 2, a video stream 3 and a sub-picture stream 4. The audio stream 2 is fed to an audio stream separator ASS, which provides a selected audio stream 2' to an audio decoder ADec. The selected audio stream 2' is, for example, a certain language audio stream. The audio decoder ADec decodes the selected audio stream 2' and outputs the audio signal Aud to be reproduced. The video stream 3 is provided to a video decoder VDec for decoding the encoded video stream, e.g. an MPEG 2 decoder. The decoded video stream 3' is provided to a mixer MIX, which combines it with a processed sub-picture 5 and outputs the video signal Vid to be displayed or further processed. The sub-picture stream 4 is provided to a sub-picture stream separator SSS, which separates sub-picture packets according to settings of the device and provides selected sub-picture packets to a sub-picture packet collector SPPC of the sub-picture decoder SP. The sub-picture stream separator SSS further outputs a signal to a PTS detector PTSD for detecting whether a respective time stamp is available or not. In case that such time stamp is present in the current sub-picture packet, this is indicated to a next SPU detector NSPU of the decoder SP. In the demultiplexer there is further provided a magic_word detector MWD for detecting whether an indicator for indicating availability of enhanced sub-picture data is present or not. In case of its presence in the data stream, this is indicated to an enhanced display mode activator HDTVM. Further, if the indicator magic_word is present, the size HDTV_SPU_SZ of the enhanced sub-picture data area is detected. In any case the size SPU_SZ is detected. The size information is used to indicate the end of a sub-picture unit in a sub-picture buffer SPB of the decoder.

In the sub-picture decoder SP the sub-picture packet collector SPPC collects sub-picture packets received from the demultiplexer DMUX and provides them to a sub-picture buffer SPB. The sub-picture packets are written into the sub-picture buffer SPB in a continuous or circular, revolving manner that is by starting anew at the first buffer address when the last buffer address is reached and by overwriting the oldest packets already stored in the buffer SPB. Until the size signal SPU_SZ or HDTV_SPU_SZ is received the latest sub-picture packets stored belong to a not yet completely loaded SPU LSPU. Although only an incompletely loaded sub-picture unit LSPU is shown in the drawing, several completely loaded sub-picuture units LSPU may be present in the sub-picture buffer SPB before becoming active sub-picture unit ASPU, which is actually used for being displayed. In the buffer SPB also old sub-picture units OSPU remain after having been processed and before they are overwritten with new sub-picture packets. The start of each sub-picture unit is indicated by the next sub-picture unit detector NSPU in accordance with the existence of a time stamp. The active SPU ASPU is processed by a sub-picture unit processor PSPU, which uses pixel data PXDi as well as commands SP_DCSQi of the active sub-picture unit ASPU to generate a processed sub-picture 5 to be provided to the mixer MIX. If the enhanced display mode activator HDTVM indicates that enhanced display mode is activated, the sub-picture unit processor PSPU ignores an end command CMD_END, which is provided according to the current DVD standard. This is indicated by switch 7 being connected to a unit NCE, which indicates to ignore the end command CMD_END. In case normal display according to current DVD standard is used switch 7 is connected to unit CE, which indicates to use the end command CMD_END. This command CMD_END usually indicates that no further command is available in the command area SP_DCSQT and thus no further command is to be executed. In case enhanced display is activated the sub-picture unit processor PSPU further processes commands after the first end command CMD_END until another end command HDTV_CMD_END. The sub-picture unit processor PSPU also takes into account a sub-picture colour and contrast map SPCC or a highlight colour and contrast map HLICC, which latter is provided from the program chain processor PGCP. In case the program chain processor PGCP indicates an area to be highlighted, a highlight area detector HLIAD switches the maps SPCC and HLICC to be input to the sub-picture unit processor PSPU. An alternative solution not making use of a second end command HDTV_CMD_END has different meanings for units NCE and CE: in this case the unit NCE indicates to make use of the enhanced commands xxx_HDTV_yyy while unit CE indicates to make use only of the commands xxx_yyy of the current DVD standard.

## Claims

1. Data stream for transporting sub-picture units (SPU) for enhanced display, which data stream is compatible with devices compliant to conventional DVD standard, comprising:
- an increased sub-picture unit header (HDTV_SPUH), which extends into a conventional pixel data area (PXD),
- an indicator (MAGIC_WORD) for indicating availability of enhanced sub-picture data (HDTV_SP_DCSQi, HDTV_PXDi), the indicator (MAGIC_WORD) being located in the increased sub-picture unit header (HDTV_SPUH), and
- a pointer (SET_DSPXA) for indicating a start address of pixel data (PXDi), the pointer pointing to an address following the increased sub-picture unit header (HDTV_SPUH).

2. Data stream according to claim 1, wherein the indicator (MAGIC_WORD) is located at a predefined location in the increased sub-picture unit header (HDTV_SPUH).

3. Data stream according to one of claims 1 to 3, wherein the indicator (MAGIC_WORD) is provided in an unconventional format with respect to the conventional pixel data area (PXD).

4. Data stream according to one of claims 1 to 3, **characterized in that** the enhanced sub-picture data is high resolution display data.

5. Data stream for transporting sub-picture units (SPU) for enhanced display, which data stream is compatible with devices being compliant to conventional DVD standard, comprising:
- a header area (SPUH),
- a conventional pixel data area (PXD)
- a command area (SP_DCSQT), and
- an enhanced pixel data area (HDTV_PXD),
wherein the enhanced pixel data area (HDTV_PXD) is arranged following the command area (SP_DCSQT) and at least one of an indicator (MAGIC_WORD) and a pointer (SET_DSPXA) is arranged in an area which is hidden according to conventional DVD standard.

6. Data stream according to claim 5, wherein the hidden area is provided for in one of said command area (SP_DCSQT) and said conventional pixel data area (PXD).

7. Data stream according to one of claims 5 to 6, **characterized in that** it further comprises the features of one of claims 1 to 4.

8. Data stream according to one of the preceding claims, **characterized in that** the data arranged in the enhanced pixel data area (HDTV_PXD) constitute one of
- pixel data for a complete enhanced sub-picture, and
- up-size data for generating, in combination with the conventional pixel data (PXD), a complete enhanced sub-picture.

9. Data stream according to one of the preceding claims, **characterized in that** the command area (SP_DCSQT) is provided with at least one enhanced command (XXX_HDTV_YYY) which only slightly differs from a corresponding conventional command (XXX_YYY).

10. Data stream according to claim 4, wherein an enhanced command (XXX_HDTV_YYY) differs from the corresponding conventional command (XXX_YYY) by one of
- making use of bits being reserved according to conventional standard,
- inserting additional bits or bytes, and
- changing the command code by a predefined value.

11. Data stream according to one of the preceding claims, **characterized in that** it comprises two end commands (CMD_END, CMD_HDTV_END) in a single sub-picture display control sequence (SP_DCSQi), a first of said end commands (CMD_END) being arranged between conventional commands (XXX_YYY) and a first enhanced command (XXX_HDTV_YYY), a second of said end commands (HDTV_CMD_END) being arranged following the last one enhanced command (XXX_HDTV_YYY, CMD_END).

12. Data stream for transporting highlight information (HLI) for enhanced resolution display, which data stream is compatible with devices being compliant to conventional resolution DVD standard, comprising
- position information (BTN_POSI) according to conventional DVD standard,
- reserved bits according to conventional DVD standard,
wherein predefined bits comprise least significant bit information and/or most significant bit information of start and/or end coordinates.

13. Data stream for transporting highlight information (HLI) for enhanced resolution display, which data stream is compatible with devices being compliant to conventional resolution DVD standard, comprising
position information (BTN_POSI) being arranged at positions as specified according to conventional DVD standard,
wherein coordinates are down-scaled by a predefined factor and/or shifted by a predefined offset compared to the highlight area to be displayed.

14. Data carrier (DVD) comprising a data stream having a structure according to one of the preceding claims

15. Device for processing sub-picture units (SPU) for enhanced resolution display which sub-picture units (SPU) being compliant to conventional resolution DVD standard **characterized in that** the device comprises
- a detector for detecting in indicator (MAGIC_WORD) for indicating availability of enhanced sub-picture data, and
- a processing unit for processing the enhanced sub-picture data.

16. Device for processing a data stream comprising highlight information (HLI) for enhanced resolution display, which data stream is compatible with devices being compliant to conventional resolution DVD standard, comprising
- means for extracting position information (BTN_POSI),
- processing means for generating processed position information (BTN_HDTV_POSI) by
- - multiplying start and/or end coordinates of said position information (BTN_POSI), by a predetermined factor, and/or
- - adding to said coordinates a predetermined offset value, and
- mixing means (Mix) for inserting a highlight area defined by the processed position information (BTN_HDTV_POSI) into a picture to be displayed.

17. Device for processing a data stream comprising highlight information (HLI) for enhanced resolution display, which data stream is compatible with devices being compliant to conventional resolution DVD standard, comprising
- means for extracting start and/or end coordinates of a position information (BTN_POSI),
- means for extracting dedicated bits of the position information,
- means for combining said dedicated bits as least significant bit and/or as most significant bit of dedicated start and/or end coordinates in order to generate processed position information (BTN_HDTV_POSI), and
- mixing means (Mix) for inserting a highlight area defined by the processed position information (BTN_HDTV_POSI) into a picture to be displayed.

18. Method for processing a data stream according to the invention comprises the steps of
- detecting presence of an indicator (MAGIC_WORD) for indicating availability of enhanced sub-picture data, and
- processing enhanced sub-picture data if said indicator is present, else processing conventional sub-picture data.

19. Method for processing a data stream according to the invention comprises the steps of
- extracting highlight position information,
- processing said highlight position information, and
- inserting a highlight area defined by the processed position information into a picture to be displayed.
